# EUROPEAN PATENT APPLICATION

(11) **EP 4 474 145 A1**
(43) Date of publication of application: **11.12.2024**
(21) Application number: 23178520.5
(22) Date of filing: 09.06.2023
(51) Int. Cl.: B32B 17/10, G02F 1/1345

(54) **METHOD FOR PROVIDING A LAMINATED STACK FOR AN OPTICALLY SWITCHABLE GLASS ASSEMBLY, AND SUCH LAMINATED STACK**

(71) Applicant: Inalfa Roof Systems Group B.V., 5807 GW Oostrum (NL)
(72) Inventor: DE BIE, Sander, 6361 XB Nuth (NL); VAN DOLEWEERD, Theodorus, 6024 AK Budel-Dorplein (NL); GEURTS, Stephan Paulus Jan, 5951 BS Belfeld (NL)
(74) Representative: De Vries & Metman

(57) **Abstract**

The invention relates to a laminated stack for a switchable glass assembly and a method for providing such. The laminated stack includes first and second thermoplastic film each having a surface coated with a transparent conductive coating, a switchable film located between the first and second thermoplastic film, facing each of the first and second coated surfaces. The first thermoplastic film extends in surface beyond a perimeter of the switchable film and the second thermoplastic film, defining a print zone and includes two segments. A printed circuit in the print zone includes for each segment a busbar and a track running from the busbar to an external connection zone (46) of the print zone, wherein a single first segment includes a conductive bridge connecting the second conductive coating directly to the busbar of the single segment.

## Description

The present disclosure relates to switchable glass assemblies, and to methods for providing such switchable glass assemblies, which are suitable for use in automotive applications.

### BACKGROUND

Optically switchable glass assemblies are constructed from layered glass structures that may be used as vehicle windows or sunroofs capable of selectively switching between an opaque "OFF" state for blocking, e.g., visible light, infrared and/or ultraviolet energy, and/or providing privacy, a transparent "ON" state for providing visibility and the transmission of visible light and/or energy, and a transparent "ON" state for allowing light to pass through. The switching function is accomplished by applying an electric field to a switchable film, such as e.g. polymer dispersed liquid crystal (PDLC) or suspended particle device (SPD), within the glass construction. When the switchable film is subjected to an applied electric field, discrete formations, such as droplets of e.g. a liquid crystals dispersed throughout a polymer matrix in the PDLC, assume a transparent state because the long molecular axes of the liquid crystals align in a parallel orientation in the direction of the electric field, which is also referred to as a nematic phase. The parallel orientation provides a direction for light to pass. When the electric field is not applied the crystals return to their initial orientations.

In a typical switchable glass construction, the switchable film is provided between two thermoplastic films, which may be coated with a transparent conductive material, such as a transparent conductive oxide (TCO) as e.g. Indium Tin Oxide (ITO), between each thermoplastic film and the switchable film. The switchable film together with the coated thermoplastic films may be referred to as a functional layer. The thermoplastic film may include various suitable materials, such as e.g. polyvinyl butyral (PVB), or thermoplastic polyurethane (TPU). The functional layer may be laminated with intermediate layers to improve bonding with glass substrates or sheets to form a switchable laminated structure. The intermediate or bonding layers may include Ethylene Vinyl Acetate (EVA), or other various suitable materials. Providing the laminated structure between two glass sheets will form the switchable glass construction. An encapsulation layer at or around the perimeter of the laminated structure may provide sealing of the functional layer against dirt, dust, moisture and other interference.

In order to enable applying an electric filed to the switchable film, the conductive coatings on respective sides of the switchable film will require separate connections to corresponding outputs of a power supply. Accordingly, an electrical connection will need to be provided separately between each conductive coating of the functional layer and respective contact points, referred to as busbars, provided at edges of the laminated structure. A printed circuit of conductive tracks running from the busbars towards an edge of the laminated structure allows for connecting a connection cable extending externally of the switchable glass construction. In case of a laminated structure having multiple segments that may be individually switchable, each segment will require a separate connection to a power supply and a shared connection to a common electrode. To alleviate assembly of such a laminated structure, the busbar contacts and printed circuit are preferably provided at the same layer height.

### SUMMARY OF INVENTION

It is an object of the invention to provide a laminated stack that addresses the above-mentioned needs. According to the invention, this object is achieved by providing a method for providing a laminated stack for a switchable panel with a conductive bridge.

Having the busbar contacts and printed circuits at the same layer level may be obtained by sacrificing one segment for providing a short circuit between both the conductive layers. However, it has been found that the electrical contact running from one conductive oxide coating to another conductive coating provides significant resistance, resulting, regardless of the materials used, in poor connectivity due to their molecular composition or structure of the coated surfaces.

According to one aspect, there is provided a method for providing a laminated stack for a switchable glass assembly. The method including providing a precursor stack including a first thermoplastic film having a first coated surface with a first transparent conductive coating, the first thermoplastic film including at least two segments separated by at least one cut line running through the first conductive coating. The precursor stack further including a second thermoplastic film having a second coated surface with a second transparent conductive coating and a switchable film between the first and second thermoplastic film, facing each of the first and second coated surfaces. The method including removing a portion of the second thermoplastic film, second conductive coating and switchable film, such that the first thermoplastic film extends in surface beyond a perimeter of the switchable film and the second thermoplastic film, thereby defining a print zone along at least one edge of the perimeter of the switchable film. The method including providing a conductive printed circuit in the print zone, the printed circuit including for each segment a busbar in conductive contact with the first conductive coating of each respective segment, and a track running from the busbar to an external connection zone of the print zone. The method further including providing a conductive bridge connecting the second conductive coating of a single first segment of the at least two segments directly to the busbar of the single segment.

According to one aspect, there is provided a laminated stack for a switchable glass assembly, the laminated stack including a first thermoplastic film having a first surface coated with a first transparent conductive coating and a second thermoplastic film having a second surface coated with a second transparent conductive coating, a switchable film located between the first and second thermoplastic film, facing each of the first and second coated surfaces, wherein the first thermoplastic film extends in surface beyond a perimeter of the switchable film and the second thermoplastic film, defining a print zone along at least one edge of the perimeter. And wherein the first thermoplastic film includes at least two segments separated by at least one cut line running through the first conductive coating. The laminated stack including a connective printed circuit in the print zone, the printed circuit comprising for each segment a busbar in conductive contact with the first coated surface of each respective segment, and a track running from the busbar to an external connection zone of the print zone. The laminated stack further including for a single first segment of the at least two segments a conductive bridge connecting the second conductive coating directly to the busbar of the single segment.

According to another aspect, there is provided a glass assembly including the laminated stack as disclosed.

According to one further aspect, there is provided a roof panel assembly having a glass assembly including a laminated stack as disclosed.

Particular embodiments of the invention are set forth in the dependent claims.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawing, wherein:
FIG. 1 illustrates a perspective view of an example of an optically switchable panel for a vehicle roof;
FIG. 2 illustrates a top view of another example of an switchable panel similar to that of Fig. 1;
FIG. 3A illustrates a cross-sectional view of the panel of Fig. 1 along line A-A' in a first state;
FIG. 3B illustrates the cross-sectional view of the panel of Fig. 2A in a second state;
Fig. 4 illustrates a method for providing a laminated stack in accordance with the invention
FIG. 5A illustrates a top view of an embodiment of a segmented switchable panel in accordance with the invention;
FIG. 5B illustrates a cross-sectional view of the panel of Fig. 5A along line B-B';
FIG. 5C illustrates a cross-sectional view of the panel of Fig. 5A along line C-C';
FIG. 6A illustrates a top view of another embodiment of a segmented switchable panel in accordance with the invention;
FIG. 6B illustrates a cross-sectional view of the panel of Fig. 6A along line B-B';
FIG. 6C illustrates a cross-sectional view of the panel of Fig. 6A along line C-C';
FIG. 7A illustrates a top view of a precursor laminated stack for a switchable panel;
Fig. 7B illustrates a cross-sectional view of the panel of Fig. 7A along line C-C';
FIG. 8A illustrates a top view of the precursor laminated stack of Fig. 7A when removing a portion of thermoplastic film and switchable film;
Fig. 8B illustrates a cross-sectional view of the panel of Fig. 8A along line C-C';
FIG. 9A illustrates a top view of the precursor laminated stack of Fig. 8A when providing a conductive printed circuit;
Fig. 9B illustrates a cross-sectional view of the panel of Fig. 9A along line C-C';
FIG. 10A illustrates a top view of the precursor laminated stack of Fig. 9A when providing a slit;
Fig. 10B illustrates a cross-sectional view of the panel of Fig. 10A along line C-C';
FIG. 11A illustrates a top view of a further embodiment of a segmented switchable panel in accordance with the invention;
FIG. 11B illustrates a cross-sectional view of the panel of Fig. 11A along line B-B';
FIG. 11C illustrates a cross-sectional view of the panel of Fig. 11A along line C-C';
FIG. 12A illustrates a top view of another embodiment of a segmented switchable panel in accordance with the invention;
FIG. 12B illustrates a cross-sectional view of the panel of Fig. 12A along line B-B';
FIG. 12C illustrates a cross-sectional view of the panel of Fig. 12A along line C-C';
FIG. 13A illustrates a top view of yet another embodiment of a segmented switchable panel in accordance with the invention;
FIG. 13B illustrates a cross-sectional view of the panel of Fig. 13A along line B-B';
FIG. 13C illustrates a cross-sectional view of the panel of Fig. 13A along line C-C';
FIG. 14A illustrates a top view of the precursor laminated stack of Fig. 9A when applying two cut lines for creating a cavity;
Fig. 14B illustrates a cross-sectional view of the panel of Fig. 14A along line C-C';
FIG. 15A illustrates a top view of the precursor laminated stack of Fig. 9A when applying one cut line for creating a cavity; and
Fig. 15B illustrates a cross-sectional view of the panel of Fig. 15A along line C-C'.

### DETAILED DESCRIPTION

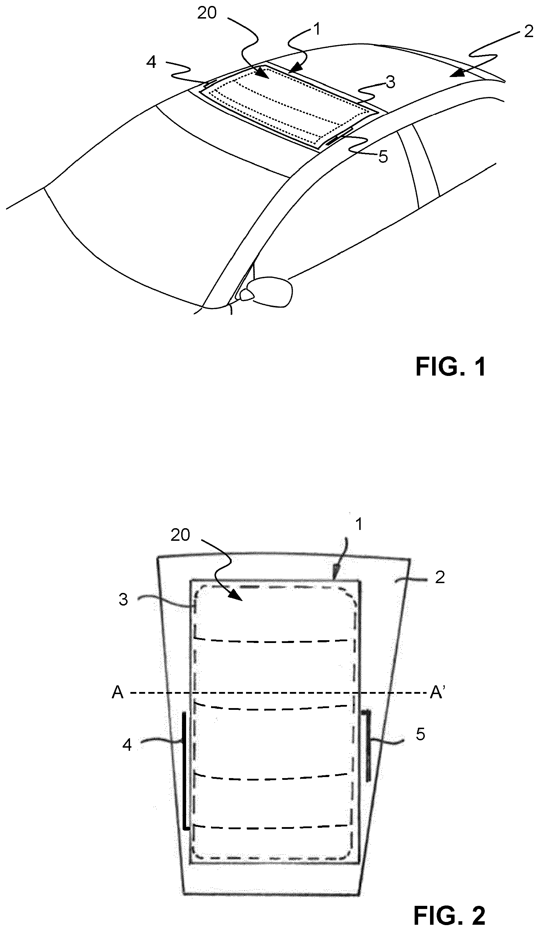

Figs. 1 - 3B are used to illustrate the basic features of a laminated stack for a switchable glass assembly 20, or glass panel in short. Such a switchable glass assembly 20 may be used for a transparent roof assembly 1 of the type intended for use in the roof 2 of a vehicle. Fig. 1 illustrates a perspective view of a vehicle roof with a switchable glass assembly. Fig. 2 shows a top view of a vehicle roof with a switchable glass assembly. The roof assembly 1 including the glass panel 20 may be used to cooperate with a roof opening 3 in the roof 2, and for its activation i.e. switching between an opaque and a transparent state, is electrically connected to a common electrode line 4 and signal electrode lines 5 which may extend along the roof assembly 1. It is noted, that in the embodiment according to both Figs. 1 and 2 there are multiple segments each having one electrode layer extending over the width of the glass panel 20 which, thus, each require a signal electrode line 5. Hence, this may be referred to as a multiple segment glass panel. In addition, a single common electrode layer extends over the entire extent of the glass panel 20 which, thus, requires only a single signal electrode line 4.

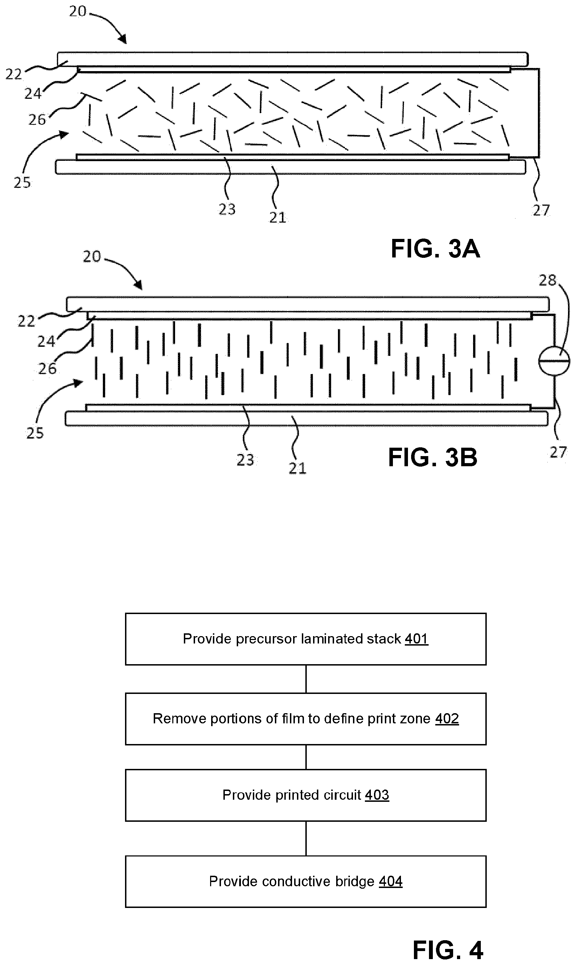

Figs. 3A and 3B illustrate the operation of the optically switchable glass assembly 20. The drawings and their associated descriptions, particularly the description of the function of the switchable layer and its components and compositions, are for purposes of description and illustration only. It is noted that Figs. 3A,3B are not to scale and that in practice some or all layers may be very thin, in the order of millimeters, and this will generally apply to all embodiments shown herein. Switchable layers per se and corresponding components and compositions are known and commercially available. Those skilled in the art will readily understand which switchable layers and materials can be employed.

FIG. 3A shows the optically switchable panel 20 including a first transparent sheet 21 and a second transparent sheet 22. A first electrode layer 23 is provided on a first surface of the first transparent sheet 21, and a second electrode layer 24 is provided on a second surface of the second transparent sheet 22. An optically switchable layer 25 is arranged between the first electrode layer 23 and the second electrode layer 24. In this embodiment, the optically switchable layer 25 includes a composition having liquid crystals 26. The wiring 27 short-circuits the first electrode layer 23 and the second electrode layer 24 so that no voltage is applied between the electrode layers 23, 24. Each of the electrode layers may consist of a thermoplastic film having a conductive coating.

The first transparent sheet 21 and the second transparent sheet 22 form a base for supporting the electrode layers 23, 24. The first transparent sheet 21 and the second transparent sheet 22 may comprise glass or synthetic material compositions such as PMMA or polycarbonate. Furthermore, one or both of the transparent sheets 21, 22 may be formed from a stack of sheets. The first transparent sheet 21 and the second transparent sheet 22 may be rigid e.g. glass or flexible e.g. transparent plastic sheets. The first transparent sheet 21 and/ or the second transparent sheet 22 may be full transparent or colored.

The electrode layers 23, 24 may include conductive components or materials having transparency. For example, one well-known transparent conductive oxide includes indium tin oxide ITO. Other suitable materials are also known.

In the absence of an electric field between the first electrode layer 23 and the second electrode layer 24, the liquid crystals 26 in the optically switchable layer 25 rotate freely and are therefore randomly oriented. In this first state, the liquid crystal 26 blocks a substantial portion of any incident light.

The optically switchable panel 20 of FIG. 3A is shown in FIG. 3B in a second state. A voltage source 28 is provided in series with the wiring 27 so that the voltage source 28 is connected between the first electrode layer 23 and the second electrode layer 24. Accordingly, a voltage is applied between the first electrode layer 23 and the second electrode layer 24. The resulting electric field aligns the crystals 26 with the electric field, allowing incident light rays to pass through the optically switchable panel 20.

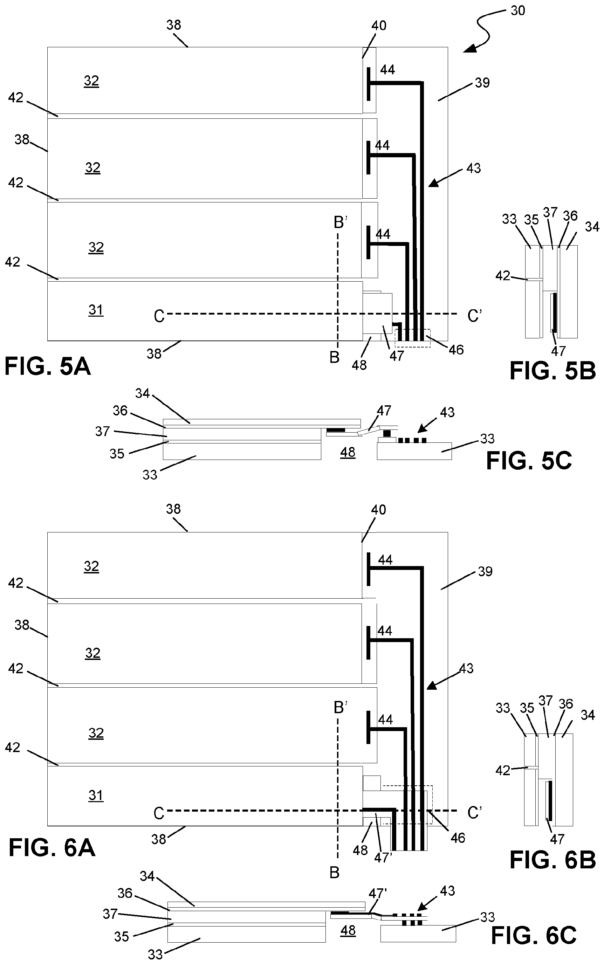

Referring to Fig. 5A, a top view of an embodiment of a laminated stack 30 with multiple segments 31, 32 is schematically illustrated. The segmentations 31, 32 are indicated in Fig. 3A for illustrative purposes only, as they would otherwise not be visible but hidden from view within the laminated structure. Figs. 5B and 5C illustrate cross-sectional views of the laminated stack 30 of Fig, 5A along lines B-B' and C-C' respectively. It is noted that Figs. 5A-5C are not to scale and that in practice some or all layers may be very thin, in the order of millimeters, and this will generally apply to all embodiments shown.

Referring to Figs. 5A-5C, the laminated stack 30 includes a first thermoplastic film 33 and a second thermoplastic film 34. The first thermoplastic film 33 has a first surface coated with a transparent conductive coating 35 i.e. a first electrode layer 35 as in Figs. 3A and 3B. The second thermoplastic film 34 has a second surface coated with a transparent conductive coating 36 i.e. a second electrode layer 36 as in Figs. 3A and 3B. The stack 30 further includes a switchable film 37, for example a PDLC or SPD, located between the first and second thermoplastic film, facing each of the first and second coated surfaces. Hence, the switchable film is enclosed by the two electrode layers 35, 36. The first thermoplastic film 33 extends in surface beyond a perimeter 38 of the switchable film 37 and the second thermoplastic film 34, which extended portion of the first thermoplastic film defines a print zone 39 along at least one edge 40 of the perimeter 38. The first thermoplastic film 33 further includes at least two segments separated by at least one cut line 42 running through the first conductive layer. In the embodiment of Figs. 5A-5C, the thermoplastic film includes 4 segments separated by three cut lines 42. The cut lines and segments in Fig. 5A are for illustrative purpose only, as they would not be visible but hidden from view within the laminated structure when viewed from the top.

In the print zone 39, a connective printed circuit 43 is provided. Thereto, the print zone 39 is prepared by ensuring that the conductive coating 35 is partially removed or absent where the conductive tracks of the printed circuit 43 are located and intended to run conductively isolated from one another. The removal may for example have been done by etching with acid, laser light or other suitable means.

The printed circuit 43 includes for each segment a busbar 44 in conductive contact with the first coated surface 35 of each respective segment 31, 32 and a conductive track running from the busbar 44, 45 to an external connection zone 46 of the print zone 39, such as outer edge of the print zone 39.

For a single first segment the laminated stack includes a conductive bridge connecting the second conductive coating directly to the busbar of the single segment. In the embodiment of Figs. 5A-5C, the single first segment is outer segment 31, and the bridge 47 includes a copper strip. In the embodiment of Figs.6A-6C, the bridge includes a flexible printed circuit FPC. In other embodiments, the bridge 47 may include a flexible flat cable FFC or yet other suitable connection means as long as it is able to connect the second conductive coating of the first segment to the respective busbar. In general, an FPC may be printed on both sides in order to provide for conductive connection where desired, and in dependence of the design.

In order to provide for the required space for positioning and locating the bridge 47, a slit 48 may be arranged at the edge 40 of the second thermoplastic film 34 of the single first segment 31 cutting through the first thermoplastic film 33 and the first conductive coating 35. To enhance connectivity between the bridge and the conductive coating, or between the bridge and the busbars or printed circuit, or other components in general, silver print, conductive tape or glue or other suitable means may be applied therebetween. Conductive tape may be available as isotropic or anisotropic form, commonly referred to as XYZ-tape or e.g. Z-tape respectively.

Referring to Fig. 6A, a top view of another embodiment of a laminated stack 30 with multiple segments 31, 32 is schematically illustrated. The segmentations 31, 32 are indicated in Fig. 6A for illustrative purpose only, as they would otherwise not be visible but hidden from view within the laminated structure. Figs. 6B and 6C illustrate cross-sectional views of the laminated stack 30 of Fig, 6A along lines B-B' and C-C' respectively. It is noted that Figs. 6A-6C are not to scale and that in practice some or all layers may be very thin, in the order of millimeters, and this will generally apply to all embodiments shown. Similar parts and components are indicated by the same reference numbers as in the foregoing figures.

Referring to Figs. 6A-6C, the laminated stack 30 includes the first thermoplastic film 33 and the second thermoplastic film 34. The first thermoplastic film 33 has the first surface coated with the transparent conductive coating 35 i.e. the first electrode layer 35 as in Figs. 3A and 3B. The second thermoplastic film 34 has the second surface coated with a transparent conductive coating 36 i.e. the second electrode layer 36 as in Figs. 3A and 3B. The stack 30 further includes the switchable film 37, for example of PDLC or SPD, located between the first and second thermoplastic film, facing each of the first and second coated surfaces. Hence, the switchable film 37 is enclosed by the two electrode layers 35, 36. The first thermoplastic film 33 extends in surface beyond the perimeter 38 of the switchable film 37 and the second thermoplastic film 34, which extended portion of the first thermoplastic film defines a print zone 39 along at least one edge 40 of the perimeter 38. The first thermoplastic film 33 further includes at least two segments separated by at least one cut line 42 running through the first conductive layer. In the embodiment of Figs. 6A- 6C, the thermoplastic film includes 4 segments separated by three cut lines 42. The cut lines and segments in Fig. 6A are for illustrative purpose only, as they would not be visible but hidden from view within the laminated structure when viewed from the top.

In the print zone 39, the connective printed circuit 43 is provided. Thereto, the print zone 39 is prepared by ensuring that the conductive coating 35 is partially removed or absent where the conductive tracks of the printed circuit 43 are located and intended to run conductively isolated from one another. The removal may for example have been done by etching with acid, laser light or other suitable means.

The printed circuit 43 includes for each segment a busbar 44 in conductive contact with the first coated surface 35 of each respective segment 31, 32 and the conductive track running from the busbar 44, 45 to external connection zone 46 of the print zone 39, such as the outer edge of the print zone 39.

For the single first segment 31 the laminated stack 30 includes again a conductive bridge connecting the second conductive coating directly to the busbar 44 of the single segment 31. As already mentioned above, in this embodiment, the bridge 47' includes a flexible printed circuit FPC. As mentioned, in general, an FPC may be printed on both sides in order to provide for conductive connection where desired, and in dependence of the design.

In order to provide for the required space for positioning and locating the bridge 47', again the slit 48 may be arranged at the edge 40 of the second thermoplastic film 34 of the single first segment 31 cutting through the first thermoplastic film 33 and the first conductive coating 35.

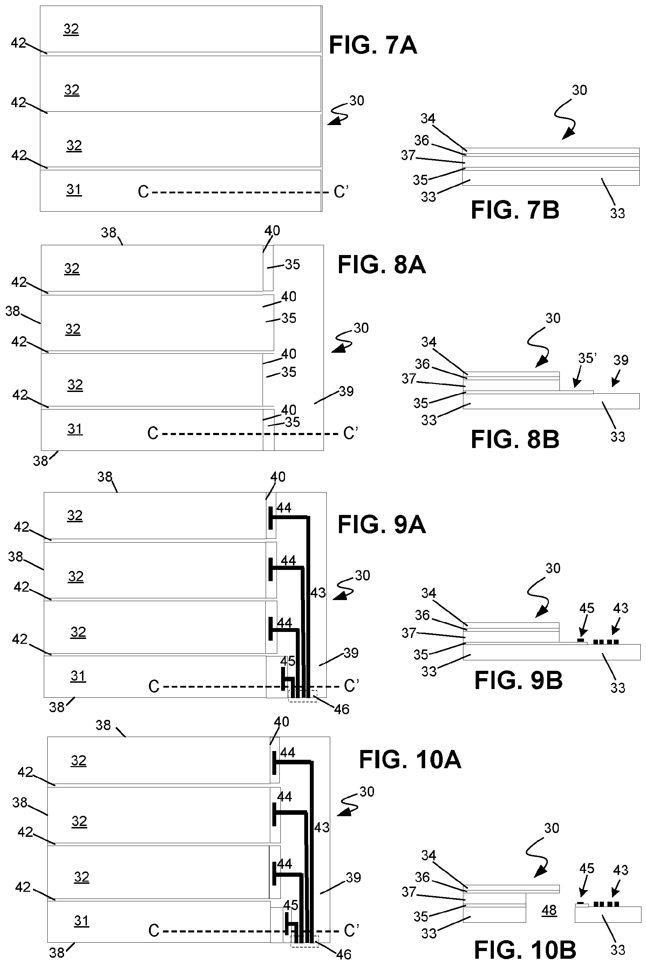

Referring to Figs. 4 and 7A - 10B, a method for providing a laminated stack according to the invention will be illustrated. In the embodiment of Fig. 4, the method starts with providing 401 a precursor stack for a switchable glass. The method proceeds with removing 402 at least one portion of film to define a print zone, providing 403 a printed circuit and providing 404 a conductive bridge. These steps are further described in detail with reference to Figs. 7A-10B, wherein the same stack is shown in various phases of processing according to the method.

FIG. 7A illustrates a top view of the precursor laminated stack as provided 401 for a switchable panel and Fig. 7B illustrates a cross-sectional view of the panel of Fig. 7A along line C-C'. The precursor stack includes a first thermoplastic film 33 having a first coated surface with a transparent conductive coating 35, the first thermoplastic film 33 including at least two segments 31, 32 separated by at least one cut line 42 running through the first conductive coating 35. The precursor stack further includes a second thermoplastic film 34 having a second coated surface with a transparent conductive coating 36 and a switchable film 37 between the first 33 and second thermoplastic film 34, facing each of the first and second coated surfaces 35, 36.

Referring to Fig. 8A and 8B, a top view and corresponding cross-section of the precursor laminated stack of Fig. 7A are shown after removing 402 at least one portion of film to define a print zone. A portion of the second thermoplastic film 34, second conductive coating 36 and switchable film 37 is removed, for example by laser etching or cutting or the like, such that the first thermoplastic film 33 extends in surface beyond a perimeter 38 of the switchable film 37 and the second thermoplastic film 34, thereby defining a print zone 39 along at least one edge 40 of the perimeter 38 of the switchable film 37. The print zone 39 is further processed by ensuring that the conductive coating 35 is partially removed or absent to form a pattern of conductively isolated parts where tracks of a printed circuit are intended. Portions of conductive coating 35 remain at the edge 40 of the perimeter 38 of the switchable film to enable contact between conductive coating 35 of induvial segments 31, 32 with the intended printed circuit via e.g. a busbar 45.

Referring to Fig. 9A and 9B, a top view and corresponding cross-section of the precursor laminated stack of Fig. 8A are shown after providing 403 the printed circuit 43. The connective printed circuit 43 may be provided by silver printing, or other suitable means like e.g. copper. The conductive tracks of the printed circuit 43 are printed on the pattern of partially removed coating as these tracks are intended to run conductively isolated from one another. Accordingly, the connective printed circuit 43 in the print zone 39includes for each segment a busbar 44, 45 in conductive contact with the first coated surface 35 of each respective segment 31, 32 and further includes a track running from the busbar 44, 45 to an external connection zone 46 of the print zone 39. The external connection zone 46 allows for connecting flexible printed circuit FPC of flexible flat cable FFC.

Referring to Fig. 10A and 10B, a top view and corresponding cross-section of the precursor laminated stack of Fig. 9A are shown when providing 404 a conductive bridge. The conductive bridge 47 connects the second conductive coating 35 of a single first segment 31 of the at least two segments 31, 32 directly to the busbar 44 of the single segment 31. To alleviate the positioning of the bridge a slit 48 may be arranged at the edge 40 of the second thermoplastic film 34 of the single first segment 31 cutting through the first thermoplastic film 33 and the first conductive coating 35. Taking advantage of the arranged slit 48, the laminated stack 30 may manipulated, e.g. by folding and opening the slit wider, to position the conductive bridge between the second conductive coating 36 and the busbar 44. In the embodiment of Figs. 5A-C, providing the conductive bridge includes arranging a strip of copper between the second conductive coating 36 and the busbar 44 of the first segment 31. In the embodiment of Figs. 6A-C, providing the conductive bridge includes arranging a strip of flexible printed circuit 47' between the second conductive coating 36 and the busbar 44 of the first segment 31. With the step of providing the conductive bridge, the laminated stack for switchable glass assembly is obtained.

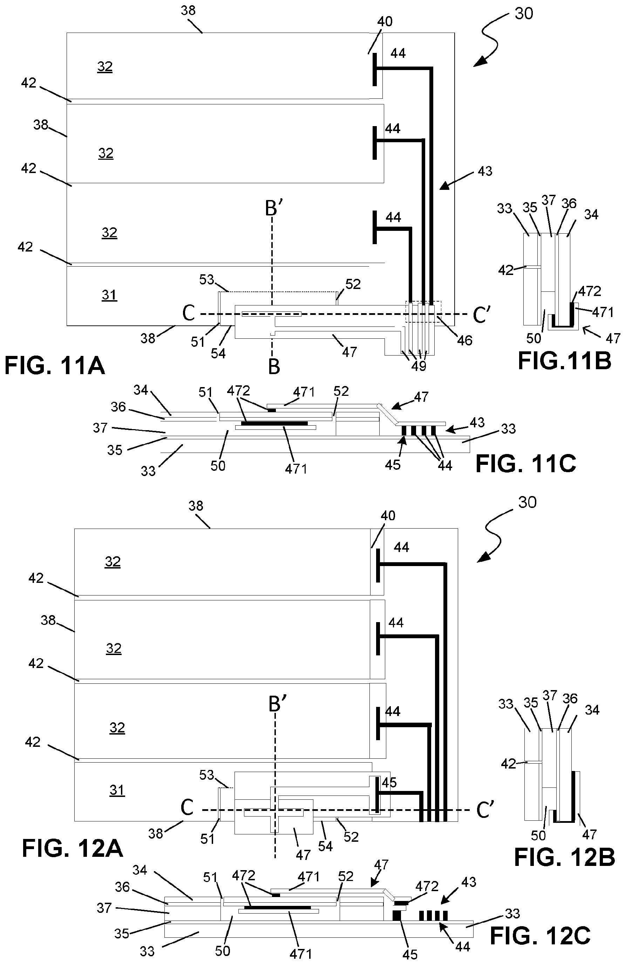

Referring to Fig. 11A-C, another embodiment of a laminated stack for another example of a switchable glass assembly is schematically illustrated. Similar to the embodiments of Fig. 5A and 6A, the laminated stack 30 again includes the first thermoplastic film 33 having a first surface coated with a transparent conductive coating 35, the second thermoplastic film 34 having a second surface coated with a transparent conductive coating 36 and the switchable film 37 located between the first 33 and second thermoplastic films 34, the switchable film facing each of the first and second coated surfaces 35, 36. The cut lines 42 and segments 31, 32 in Fig. 11A are for illustrative purpose only, as they would not be visible but hidden from view within the laminated structure when viewed from the top.

The first thermoplastic film 33 extends in surface beyond a perimeter 38 of the switchable film 37 and the second thermoplastic film 34, thereby defining a print zone 39 along at least one edge 40 of the perimeter 38. The first thermoplastic film 33 further includes at least two segments 31, 32 separated by at least one cut line 42 running through the first conductive coating 35.

The laminated stack 30 further includes again the connective printed circuit 43 in the print zone 39, with the printed circuit 43 including for each segment 31, 32 a busbar 44 in conductive contact with the first coated surface 35 of each respective segment 31, 32. The printed circuit 43 further includes for each segment a track running from the busbar 44, 45 to an external connection zone 46 of the print zone 39. The laminated stack 30 further includes for a single first segment 31 of the at least two segments 31, 32 a conductive bridge 47 connecting the second conductive coating 36 directly to the busbar of the single segment 31.

In this embodiment, the conductive bridge 47 is provided by folding an outer end thereof into a cavity 50 created at a side edge 54 of the laminated stack. During assembly, the laminated stack 30 may be folded open and the conductive bridge 47 may be positioned therein. In this embodiment, the conductive bridge 47 consists of a flexible carrier 471 having a printed circuit 472. As can be seen in Figs. 11A and 11B, the flexible carrier 471 folds around the side 54, such that the printed circuit 472 may be in contact with the conductive coating 36 of the second thermoplastic film 34.

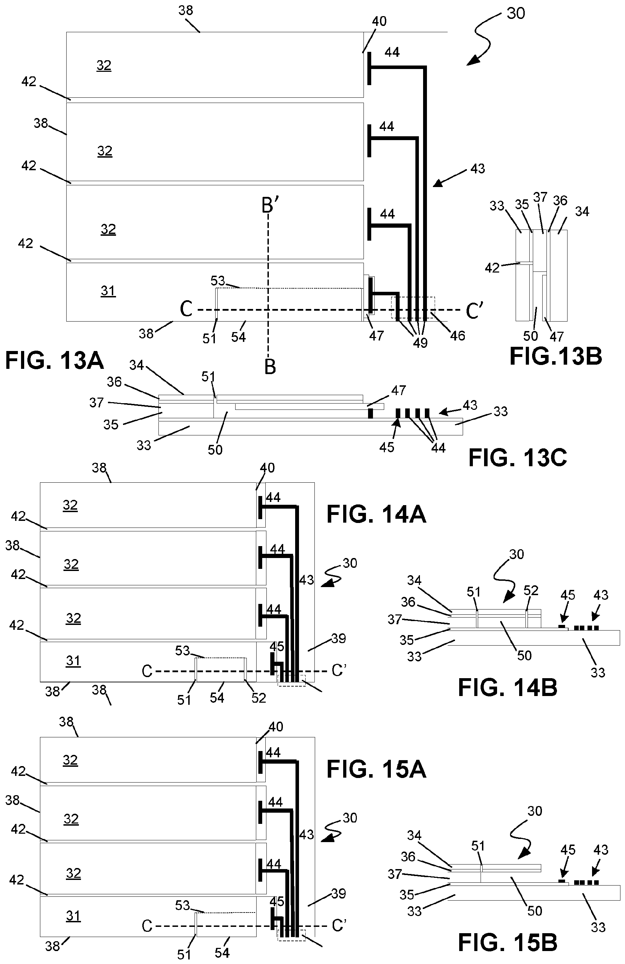

Referring to Figs. 14A and 14B, such a cavity may be provided by cutting the laminated stack along a first and a second cut line 51, 52, allowing to open up the laminated stack between the cut lines over a limited portion along a folding line 53 which gets impressed when folding the limited portion. Accordingly, a cavity 50 is created in and at, or at least near, an edge 54 of the perimeter 38 of the laminated stack 30. The opened portion may be treated to locally remove the switchable film 37 and the conductive bridge 47 may be provided by connecting it in the created cavity 50. To enhance connectivity between the bridge 47 and the conductive coating 36 of the second thermoplastic film 34, silver print, conductive tape or glue or other suitable means may be applied therebetween.

The laminated stack as illustrated in Fig. 14A and 14B, may be obtained according to the method explained in relation to Fig. 7A - 9B and then applying one or more cut lines as explained. Thus, starting with providing the precursor stack, removing portions of film to define the print zone, and providing the printed circuit. Then the conductive bridge may be provided by applying one or more cut lines 51, 52, opening up the portion of the laminated stack between the cut lines 51, 52. The cut lines 51, 52 are preferably applied in a parallel such that a defined portion of the laminated stack resides between the cut lines. The cut lines preferably run parallel to the edge 40 at which the first thermoplastic film 33 extends beyond the perimeter 38 of the second thermoplastic film 34. The one or more cut lines 51, 52 run across a part of the first segment 31 towards an edge 54 of the perimeter 38. As may be understood from Figs. 14A and 15A, edge 54 of the perimeter 38 is at a side transverse to the edge 40 where the first thermoplastic film 33 extends beyond the perimeter 38 of the second thermoplastic film 34. The cut lines cut through the second thermoplastic film and its coated surface 36, and may cut, partially or fully, through the switchable film 37 as seen in Fig. 14B. Preferably the coated surface of the first thermoplastic film 33 remains untouched.

In the top view in Fig. 11A the busbar 45 of the first segment 31 is covered by the conductive bridge 47, which in this embodiment is a flexible printed circuit FPC. For illustrative purpose, in Fig. 11A the lay-out of the tracks 49 of the FPC cable 47 are indicated, even though these would be present on the other side, hidden from view, of the FPC cable. In the embodiment of Figs. 11A-C, it is possible to apply a single FPC that may be integrated with the laminar stack and run out of a switchable glass assembly to be connected to a power source. In another embodiment of the laminated stack, the respective busbar 45 of the first segment 31 may be dispensed with.

Referring to Figs. 12A-C, another embodiment of a laminated stack 30 is illustrated, wherein similar components are indicated by the same reference numbers as in Figs. 11A-C. In contrast to the embodiment of Figs. 11A-C, in this embodiment the FPC does not run to the external connection zone 46; it runs towards and terminates at busbar 45. When this laminated stack is to form part of a switchable glass assembly, a separate FPC or other connection cable may be provided for connecting to the tracks of the printed circuit in the external connecting zone. Again, the flexible carrier 471 is folded around the edge 54 such that the printed circuit 472 may connect with the conductive coating 36 of the second thermoplastic film 34. The cut lines 42 and segments 31, 32 in Fig. 12A are for illustrative purpose only, as they would not be visible but hidden from view within the laminated structure when viewed from the top.

Also in this embodiment, the conductive bridge 47 is provided by folding the outer end thereof into cavity 50 which is created in and at the side edge 54 of the laminated stack 30. During assembly, the laminated stack 30 may then be folded open and the conductive bridge 47 may be positioned therein. Such cavity 50 may be provided by cutting the laminated stack 30 along first and second cut lines 51, 52, allowing to open up the laminated stack over another limited portion along folding line 53. The opened portion may again be treated to locally remove the switchable film 37 and create the cavity 50. The cut lines 42 and segments 31, 32 in Fig. 13A are for illustrative purpose only, as they would not be visible but hidden from view within the laminated structure when viewed from the top.

Referring to Figs. 13A-C, yet another embodiment of a laminated stack 30 is illustrated, wherein similar components are indicated by the same reference numbers as in Figs. 12A-C. In contrast to the embodiment of Figs. 12A-C, in this embodiment the conductive bridge consists of a copper strip that runs towards and terminates at busbar 45. When this laminated stack is to form part of a switchable glass assembly, a separate FPC or other connection cable may be provided for connecting to the tracks of the printed circuit in the external connecting zone.

In this embodiment, the conductive bridge 47 is provided by moving the copper strip into cavity 50 which is created in and at the side edge of the laminated stack 30. During assembly, the laminated stack 30 may then be folded open and the conductive bridge 47 may be positioned therein. Referring to Figs. 15A and 15B, such cavity 50 may be provided by cutting the laminated stack 30 along a single cut line 51, allowing to open up the laminated stack over another limited portion along folding line 53. The opened portion may again be treated to locally remove the switchable film 37. The laminated stack as illustrated in Fig. 15A and 145, may be obtained according to the method explained in relation to Fig. 7A - 9B and then applying one or more cut lines as explained above.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. Method for providing a laminated stack (30) for a switchable glass assembly, comprising:
providing a precursor stack comprising:
a first thermoplastic film (33) having a first coated surface with a first transparent conductive coating (35), the first thermoplastic film (33) comprising at least two segments (31, 32) separated by at least one cut line (42) running through the first conductive coating (35);
a second thermoplastic film (34) having a second coated surface with a second transparent conductive coating (36); and
a switchable film (37) between the first (33) and second thermoplastic film (34), facing each of the first and second coated surfaces (35,36);
removing (402) a portion of the second thermoplastic film (34), second conductive coating (36) and switchable film (37), such that the first thermoplastic film (33) extends in surface beyond a perimeter (38) of the switchable film (37) and the second thermoplastic film (34), thereby defining a print zone (39) along at least one edge (40) of the perimeter (38) of the switchable film (37);
providing a conductive printed circuit (43) in the print zone (39), the printed circuit (43) comprising for each segment:
a busbar (44, 45) in conductive contact with the first conductive coating (35) of each respective segment (31, 32); and
a track running from the busbar (44, 45) to an external connection zone (46) of the print zone (39);
providing a conductive bridge (47) connecting the second conductive coating (35) of a single first segment (31) of the at least two segments (31, 32) directly to the busbar (45) of the single segment.

2. Method according to claim 1, wherein providing a conductive bridge (47) comprises:
arranging a strip of copper, flexible print circuit FPC, or flexible flat cable FFC between the second conductive coating (36) and the busbar (45) of the first segment (31).

3. Method according to claim 1 or 2, wherein providing a conductive bridge (47) comprises:
arranging a slit (48) at the edge (40) of the second thermoplastic film (34) of the single first segment (31) cutting through the first thermoplastic film (33) and the first conductive coating (35).

4. Method according to any of claims 1 - 3, wherein providing a conductive bridge (47) further comprises:
applying one or more cut lines (51, 52) for creating a cavity (50) near an edge of the perimeter (38) of the laminated stack (30);
locally removing a portion of the switchable film (37) in the cavity (50) between the cut lines (51, 52).

5. Method according to any of the preceding claims, further comprising:
arranging the first single segment (31) as a common electrode.

6. Laminated stack (30) for a switchable glass assembly, comprising:
a first thermoplastic film (33) having a first surface coated with a first transparent conductive coating (35);
a second thermoplastic film (34) having a second surface coated with a second transparent conductive coating (36);
a switchable film (37) located between the first (33) and second thermoplastic film (34), facing each of the first and second coated surfaces (35, 36);
wherein the first thermoplastic film (33) extends in surface beyond a perimeter (38) of the switchable film (37) and the second thermoplastic film (34), defining a print zone (39) along at least one edge (40) of the perimeter (38);
wherein the first thermoplastic film (33) comprises at least two segments (31, 32) separated by at least one cut line (42) running through the first conductive coating (35);
the laminated stack (30) further comprising:
a connective printed circuit (43) in the print zone (39), the printed circuit (43) comprising for each segment (31, 32):
a busbar (44, 45) in conductive contact with the first coated surface (35) of each respective segment (31, 32); and
a track running from the busbar (44, 45) to an external connection zone (46) of the print zone (39);
the laminated stack (30) further comprising for a single first segment (31) of the at least two segments (31, 32):
a conductive bridge (47) connecting the second conductive coating (36) directly to the busbar of the single segment.

7. Laminated stack (30) according to claim 5, wherein the first single segment (31) is arranged as common electrode.

8. Laminated stack (30) according to claim 5 or 6, wherein the bridge (47) comprises a strip of copper, flexible print circuit FPC, or flexible flat cable FFC.

9. Laminated stack (30) according to any of claims 5 - 7, further comprising a slit (48) arranged at the edge (40) of the second thermoplastic film (34) of the single first segment (31) cutting through the first thermoplastic film (33) and the first conductive coating (35).

10. Laminated stack (30) according to any of claims 5 - 8, wherein the busbar (45) of the first segment (31) is dispensed with.

11. Glass assembly comprising the laminated stack (30) according to any of the preceding claims.

12. Glass assembly according to claim 9, comprising a glazing glass or synthetic material composition, like PMMA or polycarbonate, providing a transparent sheet or panel.

13. Roof panel assembly comprising a glass assembly according to any of the preceding claims.
